Europäisches Patentamt

European Patent Office

Office européen des brevets

(11) Publication number: **0 121 071**
**B1**

## EUROPEAN PATENT SPECIFICATION

(45) Date of publication of patent specification: **22.08.90**

(21) Application number: **84101732.0**

(22) Date of filing: **20.02.84**

(51) Int. Cl.⁵: **G 06 F 3/02,** G 06 F 15/20, G 06 F 15/38

(54) Concurrent multi-lingual use in data processing systems.

(30) Priority: **30.03.83 US 480419**
**30.03.83 US 480418**

(43) Date of publication of application:
**10.10.84 Bulletin 84/41**

(45) Publication of the grant of the patent:
**22.08.90 Bulletin 90/34**

(84) Designated Contracting States:
**DE FR GB IT**

(56) References cited:
EP-A-0 014 312
FR-A-2 319 936
GB-A-1 363 910

IBM TECHNICAL DISCLOSURE BULLETIN, vol.
17, no. 6, November 1974, pages 1763-1764,
New York, US; T.N.BROWN: "Language
translation of code"

(73) Proprietor: **International Business Machines Corporation**
**Old Orchard Road**
**Armonk, N.Y. 10504 (US)**

(72) Inventor: **Crabtree, Robert Pierre**
**3013 Hickory Hill**
**Colleyville Texas 76034 (US)**
Inventor: **Innes, John G.**
**3701 Country Club Road**
**Arlington Texas 76013 (US)**

(74) Representative: **Combeau, Jacques**
**Compagnie IBM France Département de Propriété Intellectuelle**
**F-06610 La Gaude (FR)**

Courier Press, Leamington Spa, England.

## Description

The present invention is directed to the field of data processing, and more particularly to data processing systems which allow concurrent multi-lingual use.

Background of the Invention

The change from centralized, batch operation of data processing systems to distributed, interactive usage has resulted in more users being directly involved with these systems. When a data processing system is used in a country with multiple national languages or is accessed by user terminals located in different countries with different national languages, the system must accept commands and respond in the national language or languages of the users. In the past, support for national languages has been accomplished by placing all messages in a collection that can be replaced either completely such that all users of a given system will see messages in a selected national language, or on a user by user basis such that each user will see messages of one national language. The first approach fails to offer a solution for users in a country, such as Canada, where there are more than one national language. Both approaches handle output only, are typically limited to messages, and have the following problems:

1. language-dependent text other than messages exist in most computers in the form of language dependent (a) command verbs entered as input, such as "Delete", which must be recognizable by a program without need for separate programs to handle each national language, (b) keywords entered as input in commands or as screen panel fields, such as "source", (c) online documentation or (d) prompts and help information.

The problem of treating language dependent text is considered in European Patent application EP-A-14312, which however, does not describe a concurrent multilingual operation between users and several levels of programs.

2. They do not allow appropriate responses from service functions in a connected computer that has no knowledge of the requestor's language preference. For example, a user may invoke service A on computer 1. Service A may request assistance from service B on computer 2, and service B may need to send messages to the user even though the usage is indirect.

3. They do not allow use of a new function that is supported in a language that could be understood by the user if the preferred language is not yet available.

Even where the national problem is solved, the fact that computer users are becoming more heterogeneous as the usage of computers spreads raises other problems. For example, not only may the national language preference of users in a distributed data processing system differ, but the level of experience or knowledge of the users may vary widely. In many cases, different classes of users need to use the same computer services, and this requires messages to be customized for each class of user. For example, a programmer could understand the message, "Node XYZ does not respond, reinitialization will take 10 minutes." and could arrange other work until it became available. However, mail room data entry personel whose work depends on node XYZ might more easily understand, "Take a 10 minute coffee break and then try again." Some messages could, of course, be understood by all classes of users. Therefore, not only are translations of all messages needed for users in different national languages, but some messages must be customized for different classes of users.

Many existing applications such as COBOL and FORTRAN were originally written only in English. This has not been a problem in the past where, for example, a German programmer has learned the meaning of the application's English commands. However, as the use of such products moves away from the data processing professional, the need for national language support in the application products increases. Unfortunately, it is often time consuming and costly to modify existing applications which have been written to support only one language in such a way that they would support more than one. A common architecture or design has not been found which might be applied to solve this problem since each application addresses its message and dialog generation in a different way. One alternative to address this problem involves producing different versions of the application, each one of which supports a single national language. This is not only expensive to develop, test, and maintain but requires the installation which has a need for more than one language to purchase multiple licenses.

Summary of the Invention

It is therefore an object of the present invention, as claimed, to provide a data processing system which facilitates concurrent multi-lingual use.

It is another object of the invention to provide a data processing system capable of being used by many different people with widely varying experience and knowledge.

It is yet another object of the invention to provide a mechanism to facilitate the generation of messages by programmed components such that national language support can be added to these components without making any modifications to the component.

It is a further object of the invention to provide a way for a program to be independent of the national language in which an input to the computer is received.

Briefly stated, the objects of the invention are accomplished by using national language indexes together with specialized services to provide complete support in the national language preferred by the user. The use of national indexes as a translation key between a real value of a parameter (for example a page number) and a symbolic value of said parameter is described in patent GB-A-1363910, without, however, addressing the problem of complete language translation addressed in the present invention. As used herein, "complete" means the user will not sense output (e.g. see, hear, or feel in the case of Braille) in any other language unless it is one the user has specified as an acceptable alternative, and all input by the user (e.g. typed or spoken) is in the preferred national language. The national language indexes are selected either when the user is enrolled, or from the "Sign On" entry screen if users are not enrolled. More than one national language index is given per user, a primary index which identifies the language most preferred by a user, and one or more secondary indexes that identify languages that the user can understand even though they are not the preferred language. Use of these indexes allow all programs, including application, application control, and supervisor programs, to be independent of the user's chosen national language.

The national language indexes are used for a data collection that contains message models. Message models are stored via a message identifier primary key that is common for all usage end and a secondary key that is the national language index. A central message service composes messages from message models by substituting language independent variable values before the message is shown to the user. More particularly, the message service receives requests for message text from application, application control and supervisor programs. The requesting program supplies the message identifier, and the message service uses that as the primary key for retrieval from one or more data collections containing message models. The message service uses as a secondary key the national language index which is set when the user signs on to the computer. The message model data collections may be organized in any manner that allows use of primary and secondary keys. All such collections have a secondary key to identify the national language of the message model. In addition to the language index that is set when the user signs on, other values are set to identify an order of search among data collections according to the classification of the current user. The message service searches different data collections until it finds the first occurrence of the requested message model in the national language needed for a particular user. This classification index could be used as a tertiary index within a single data collection in an alternative implementation. That message model is composed and sent to application control. A message coordinator program in application control checks the message identifier and the type of output device to determine what action is necessary.

Separate data collections for each language contain other types of text that are more specialized or of greater volume than messages. These data collections contain the national language index as a standard part of their identifying name. The collections are made available for each user so the order of search for named elements will find the material in the primary (preferred) or secondary (usable) national language. Examples of use include on-line documentation, HELP texts, static text on display panels, and sample data for application programs or application usage environments. The idiosyncrasies and differences between languages create problems that sometimes are best solved by language-dependent versions of programs. Such cases are likely to occur when the program must be adjusted because of different languages. The advantages of such data collections being available for all programs are that all input required of a user and all text responses to the user can be in the national language of the user and, therefore, concurrent, multi-lingual use of the system is possible. For example, a French speaking user and an English speaking user can use the same programs on the same system concurrently without encountering any text in the other user's language.

The invention also allows a program to be independent of the national language in which the input to the computer is received. A kind of multi-lingual operation with users is described in European Patent application EP-A-14312. However, the data entered by the user are previously stored in a local terminal, which selects among a number of standard predetermined messages. The data entered by the user are only transferred to the host at the end of the transaction, which excludes concurrent multilingual operation by users.

In the contrary, in the present invention, a national language index is used to obtain variable names and the text strings associated with each variable, in pairs. The program can obtain the variable-name/text-string pairs directly or a central service may be requested to store the text strings for retrieval via the variable name. The variable name has a particular meaning to the program and the associated text string is the language independent input that will trigger that meaning. That is, input from the user can be compared with text strings associated with relevant variables to find the meaning known to a language-dependent program. National language indexes are used to locate the appropriate file to define command-verb synonyms, a technique common to other operating systems. The technique of variable-name/text-string pairs for use with various types of input is similar to, but more general than command-verb synonym processing.

The invention further facilitates the generation of messages by programmed components that do not have interfaces for national language support such that national language support can be added to these components without making any modifications to the components and also allows new languages to be added without modifying the components. Most operating systems have specific interfaces for user messages, such as "Write to Operator" in OS/370, "Terminal PUT" in TSO, and "Write Terminal" in VM/370. Modification of those interfaces allow messages from old programs to be intercepted and replaced with messages in other national languages. The message identifier contained in the old message is used to retrieve a template that identifies substitutable values in the original message, and the replacement message model is retrieved by the national language index. The replacement service uses the message, the template and the message model to compose an equivalent message in the user's national language.

Brief Description of the Drawings

The foregoing and other objects, aspects and advantages of the invention will be better understood from the following detailed description of a preferred embodiment with reference to the drawings, in which:

Figure 1 is a block diagram illustrating the flow of message data with direct composition of the message and use by the application program;

Figure 2 is a block diagram illustrating the flow of message data with direct composition of the message and use by the application control program;

Figure 3 is a block diagram illustrating the flow of message data with direct composition of the message and use by the supervisor program;

Figure 4 is a block diagram illustrating the flow of message data with central composition of the message and use by the application program;

Figure 5 is a block diagram illustrating the flow of message data with central composition of the message and use by the application control program; and

Figure 6 is a block diagram illustrating the flow of message data with central composition of the message and use by the supervisor program.

Description of the Preferred Embodiment

As used in the description which follows, variables behave and can be used as if they were handled by an associative memory dedicated to a specific user's job. As used herein, "job" is synonymous with "session", "process" or "address space". That is,

1. Variable names and values are dynamically definable;

2. Values associated with a specific variable may be stored or fetched by name, i.e. the program that uses them does not know their storage location;

3. Storage and retrieval of variable values is managed by a Supervisor Service;

4. Variable values are accessible, i.e. may be fetched and stored, by any program that runs for a specific user ("any program" includes Application, Application Control or Supervisor programs, and "Supervisor" is synonymous with "Operating System");

5. Variable values can be arithmetic, i.e. binary, or character strings; and

6. Implicit conversion between arithmetic values and character strings will occur automatically according to usage context, and explicit conversion in either direction can be requested.

The Supervisor (or operating system) program characteristics relevant to the invention are as follows:

1. They contain components or services that run at the highest priority;

2. They provide generic services and interfaces through which these services may be requested by either Application programs or Application Control programs;

3. They include Message Services of two types:

a. Message Request interface which receives requests from Supervisor programs or Application programs to send a specific message to a user. This interface forwards the request to Application Control programs by assigning values to variables and causing an event to be stacked for Application Control. This event allows an Application Control program to decide how to send the information to the user according to characteristics of the output device(s) used by the specific user, i.e. turn on a light, compose and display text, convert via voice synthesis, or provide a Braille surface.

b. Message Composition interface which composes message text from message models (character strings) that include recognizable variable names. The variable names in the message model are replaced with the current values associated with those names. The message model to use in composition is determined by the following

1) A message context identifier which is the same regardless of national language;

2) A primary (preferred) national language index stored in a variable when the user signed-on to the computer, or a secondary (acceptable) national language index defined and stored in a similar manner; and

3) A user class identifier used to customize the choices of messages within a given national language. For example, user class can be used to obtain message text customized according to the needs of a non-professional, a professional, a beginning user, an experienced user, and so forth.

The Application Control characteristics relevant to the invention are as follows:

1. They are programs that run at the same priority as the Supervisor, and higher that Application programs.

2. They have an event logic. Events can be triggered by any of the following:

a. any program that runs for a specific user;

b. hardware on the local computer; or

c. network data traffic from other computers.

Events are stacked until corresponding Application Control programs are free to handle them.

3. They have an event processing program to handle events created by the Message Service programs in the Supervisor. The events relay requests from either Application, Application Control, or other Supervisor programs that act for the user.

Application program characteristics relevant to the invention are as follows:

1. They are fetched and begin to run at the request of an Application Control program in a given user's job.

2. They run or execute only when Application Control and Supervisor programs have no current work to do for the specific user, i.e. at the lowest priority.

3. They can request services provided by Supervisor programs or Application Control programs.

4. Their requests may be via macros, subroutine or function calls.

5. Their requests may cause events for Application Control programs.

Message services can be used in two modes by any type of program:

1. Central Composition which is designed so a single component may handle all general message traffic to the output device that interfaces with the user. This frees application programs from need to decide whether the text goes to a display, a voice synthesizer, a Braille surface, or merely turns on an indicator light.

2. Direct Composition which leaves disposition of the message text to the program that requests its composition. This leaves the program free to use the text in several ways. Some examples follow:

a. as message that is sent to the user directly, or through other services;

b. as output to a data file, such as column headers in compiler listings, or records of system activity;

c. as a pre-fetched copy of a frequently used message to the user; or

d. as a means to check national language dependent responses from the user, i.e. words and phrases.

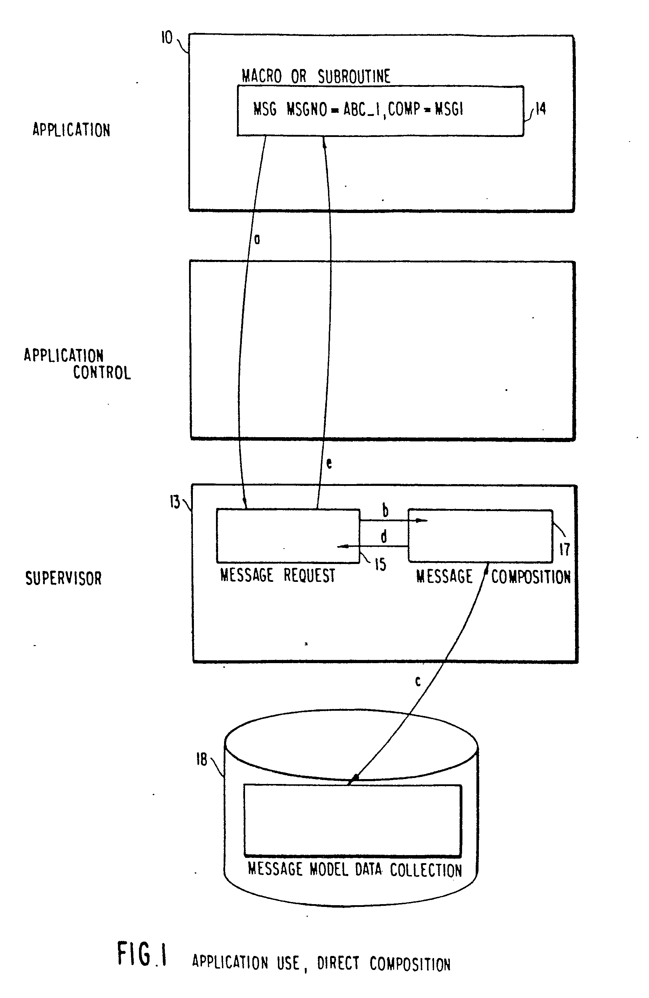

Beginning now with reference to Figure 1, the implementation of direct message composition will be described first because of the simpler flow of data. The Application program (10) uses a macro (14), or a subroutine that uses the macro, to request message composition service. The macro can also assign values to variables that will be substituted into the message model during composition, but the example here will omit that detail. For example, the macro

MSG MSGNO=ABC-1,COMP=MSG1

requests composition of message model ABC-1 into the variable MSG1. The macro causes control to pass, as indicated by the arrow a, to Message Request service (15) in the Supervisor (13). Because it is a direct composition request (COMP=MSG1), Message Request (15) calls Message Composition (17) as indicated by the arrow b. Message Composition in turn uses the Message Model identification (ABC-1) and the national language index established when the user signed onto the computer, e.g. 006 for Spanish, to obtain the correct message model from the Message Model Data Collection (18) as indicated by the arrow c. Any substitutable variable names in the message model are replaced by the current value of the variables, the resulting text is stored as the value of the variable MSG1, and control returns to Message Request (15) as indicated by the arrow d. Message Request now returns control to the Application (10) as indicated by arrow e, and the message text is ready for use by the Application.

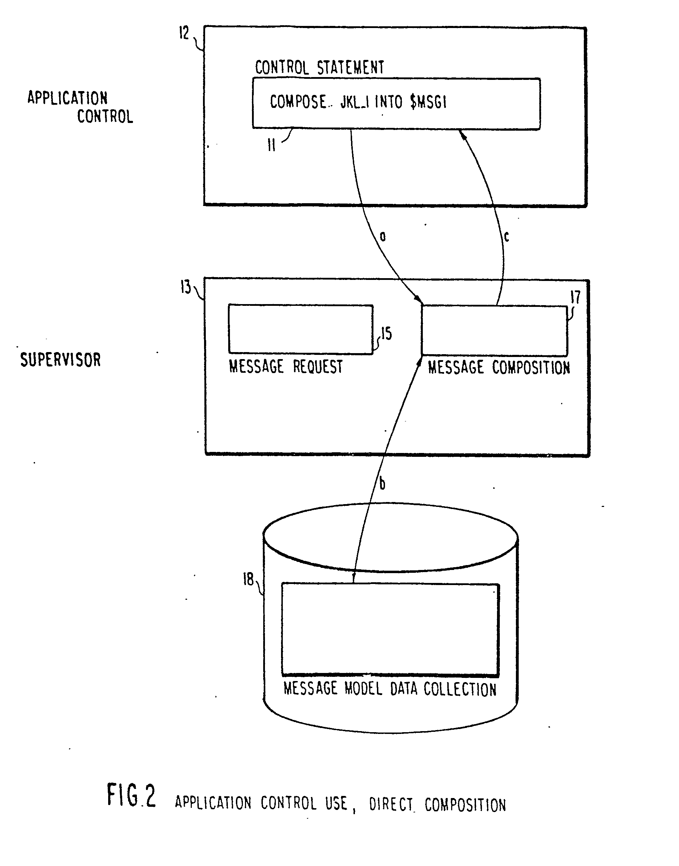

In Figure 2, the Application Control program (12) uses a control statement (11) to request message composition service. Values must have been assigned to variables that will be substituted into the message model during composition, but again the example here will omit that detail. For example, the control statement

COMPOSE JKL-1 INTO $MSG1

requests composition of message model JKL-1 into the variable $MSG1. The statement causes control to pass, as indicated by arrow a, to Message Composition service (17) in the Supervisor (13). Message Composition (17) uses the Message Model identification (JKL-1) and the national language index established when the user signed onto the computer, e.g. 006 for Spanish, to obtain the correct message model from the Message Model Data Collection (18) as indicated by the arrow b. Any substitutable variable names in the message model are replaced by the current value of the variables, the resulting text is stored as the value of the variable $MSG1, control then returns to the Application Control (12) following the control statement 11 as indicated by arrow c, and the message text is ready for use by Application Control.

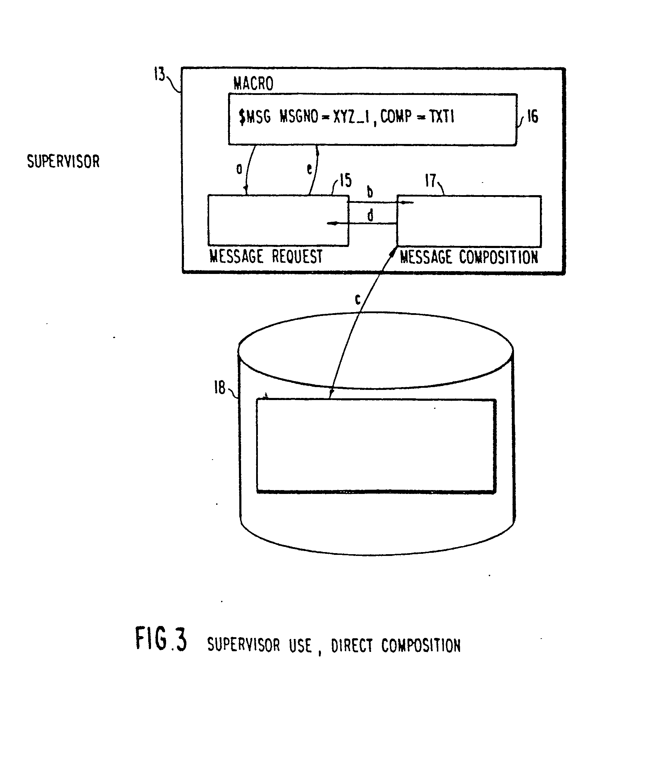

In Figure 3, the Supervisor program (13) uses a macro (16) to request message composition service. The macro can also assign values to variables that will be substituted into the message model during composition, but as before the example here will omit that detail. For example, the macro

$MSG MSGNO=XYZ-1,COMP=TXT1

requests composition of message model XYZ-1 into variable TXT1. The macro causes control to pass, as indicated by arrow a, to Message Request service (15) in the Supervisor (13). Because it is a direct composition request (COMP=TXT1), Message Request (15) calls Message Composition (17) as indicated by arrow b. Message Composition uses the Message Model identification (XYZ-1) and the national language index established when the user signed onto the computer, e.g. 006 for Spanish, to obtain the correct message model from the Message Model Data Collection (18) as indicated by arrow c. Any substitutable variable names in the message model are replaced by the current value of the variables, the resulting text is stored as the value of the variable $MSG1, and control returns to Message Request (15) as indicated by arrow d. Message Request then returns control to the Supervisor program following the macro (16) as indicated by the arrow e, and the message text is ready for use by the Supervisor.

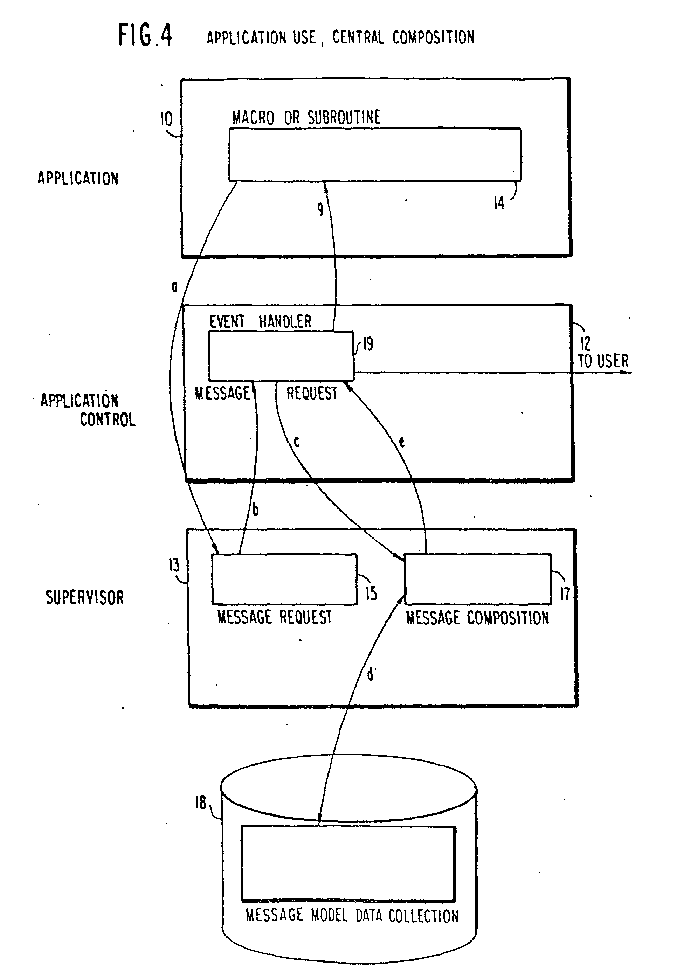

The examples described thus far illustrate implementation of the direct composition of messages. Next, beginning with reference to Figure 4 will be described examples illustrating implementation of central composition of messages. In Figure 4, the Application program (10) uses a macro (14), or a subroutine which uses the macro, to request message composition service. The macro can also assign values to variables that will be substituted into the message model during composition, but the example here will omit that detail. For example, the macro

MSG MSGNO=ABC-1

requests information from message model ABC-1 be given to the user. The macro causes control to pass, as indicated by arrow a, to Message Request service (15) in the Supervisor (13). Message Request stores the message model identification (ABC-1) in a variable and causes an event to be stacked for Message Request (19) in Application Control (12) as indicated by arrow b. Message Request (19) is an event handler that decides how the message is to be passed to the user and can base that decision on the message model identification. If the message model identification is one that means an indicator light should be turned on rather than passing textual information to the user, then that is done, and control passes back to the Application program (10) following macro (14) as indicated by arrow f. On the other hand, if message text must be passed to the user, then a control statement in Message Request (19) of Application Control (12) passes control to Message Composition (17) in the Supervisor (13) as indicated by the arrow c. Message Composition uses the Message Model identification (ABC-1) and the national language index established when the user signed onto the computer, e.g. 006 for Spanish, to obtain the correct message model from the Message Model Data Collection (18) as indicated by the arrow d. Any substitutable variable names in the message model are replaced by the current value of a variable, the resulting text is stored as the value of a variable, and control returns to Message Request (19) in Application Control (12) as indicated by arrow e. Message Request (19) sends the message text to the user as indicated by the arrow f. When all Application Control programs quiesce, then the lower priority Application program (10) resumes execution following the macro (14) as indicated by the arrow q.

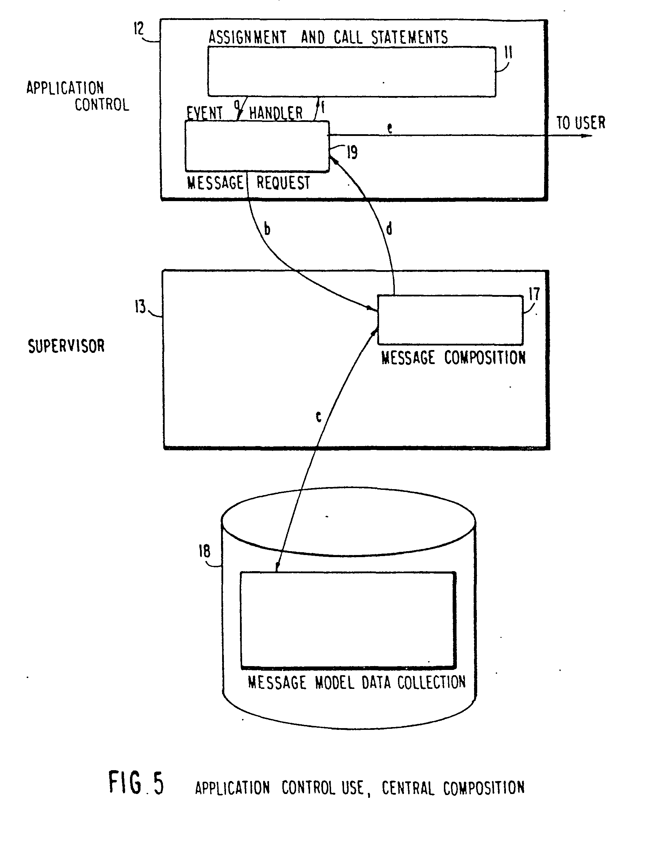

In Figure 5, the Application Control program (12) uses a control statement (11) to a) assign values to substitutable variables, b) store the message model identification in a variable, and c) call Message Request (19) in Application Control (12). Message Control (12). Message Request (19) is an event handler that decides how the message is to be passed to the user, and can base that decision on the message model identification. If the message model identification is one that means an indicator light should be turned on rather than passing textual information to the user, then that is done, and control returns to the next statement below control statements (11) as indicated by the arrow f. If, on the other hand, message text must be passed to the user, then a control statement in Message Request (19) of Application Control (12) passes control to Message Composition (17) in the Supervisor (13) as indicated by arrow b. Message Composition (17) uses the Message Model identification and the national language index established when the user signed onto the computer, e.g. 006 for Spanish, to obtain the correct message model from the Message Model Data Collection (18) as indicated by the arrow c. Any substitutable variable names in the message model are replaced by the current value of the variables, the resulting text is stored as the value of the variables, the resulting text is stored as the value of a variable, and control returns Message Request (19) in Application Control (12) as indicated by arrow d. Message Request (19) sends the message text to the user as indicated by arrow e and returns to the control statement following control statements (11) as indicated by arrow f.

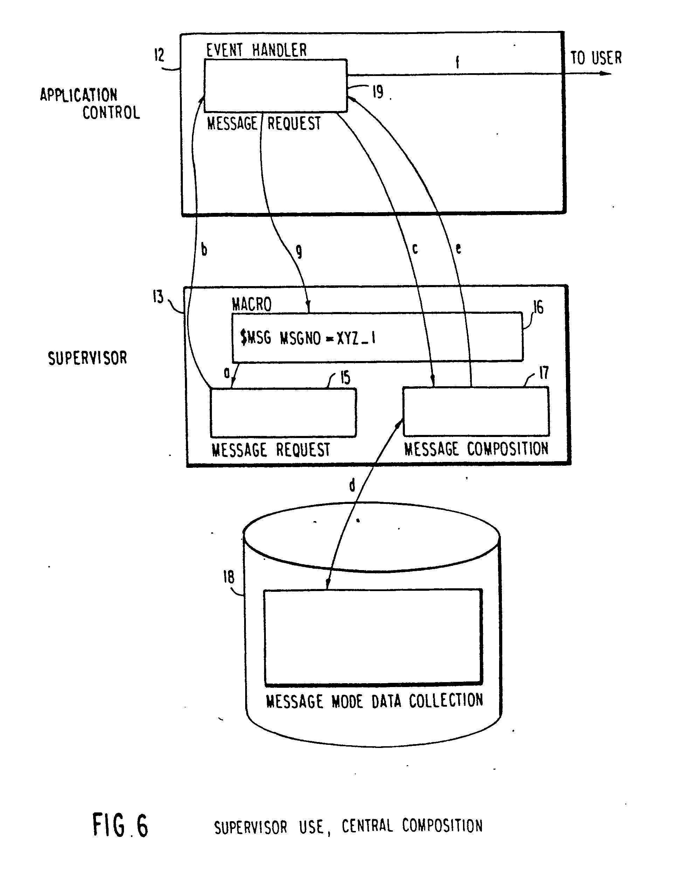

In Figure 6, the Supervisor program (13) uses a macro (16) to request message composition service. The macro can also assign values to variables that will be substituted into the message model during composition, but the example here will omit that detail. For example, the macro

MSG MSGNO=XYZ-1

requests information from message model XYZ-1 be given to the user. The macro causes control to pass, as indicated by arrow a, to Message Request service (15) in Supervisor (13).

Message Request (15) stores the message model identification (XYZ-1) in a variable, and causes an event to be stacked for Message Request (19) in Application Control (12) as indicated by arrow b. Message Request (19) is an event handler that decodes how the message is to be passed to the user, and can base that decision on the message model identification. If the message model identification is one that means an indicator light should be turned on rather than passing textual information to the user, then that is done, and control passes back to the Supervisor (13) following the macro (16) as indicated by the arrow g. On the other hand, if message text must be passed to the user, then a control statement in Message Request (19) of Application Control 12 passes control to Message Composition (17) in the Supervisor (13) as indicated by the arrow c. Message Composition uses the Message Model identification (XYZ-1) and the national language index established when the user signed onto the computer, e.g. 006 for Spanish, to obtain the correct message model from the Message Model Data Collection (18) as indicated by arrow d. Any substitutable variable names in the message model are replaced by the current value of the variables, the resulting text is stored as the value of a variable, and control returns to Message Request (19) in Application Control (12) as indicated by the arrow e. Message Request (19) sends the message text to the user as indicated by the arrow f. Control then passes back to the Supervisor (13), following the macro (15) as indicated by arrow g.

In the disclosed implementations, the invention uses a service that provides a storage facility akin to associative memory accessible to all types of programs in the computer. Alternative implementations might use dynamic table creation and manipulation of other types of memory.

Besides providing a message to the user in either a primary (preferred) or secondary (acceptable) language, the data processing system according to the invention is capable of accepting national language inputs from the user.

Language dependent input to computers include the following:

1. Command Verbs,
2. Command Keywords,
3. Screen Input Fields, and
4. Acceptable synonyms or abbreviations of any of the above.

First, consider the simplest example which assumes no abbreviations are allowed. Assume a program XYZ is written in the United States and values it can receive for input include DELETE, RENAME, UPDATE, and CREATE. A message model would be defined with identifier XYZ-INPUT-1, and which contained the following pairs of text strings:

```
XYZ-DELETE DELETE
XYZ-RENAME RENAME
XYZ-UPDATE UPDATE
XYZ-CREATE CREATE
```

A utility program is given the message identifier XYZ-INPUT-1, and it would perform the following services:

1. Request message service to provide message XYZ-INPUT-1 in the current user's national language, assuming English for the United States.

2. Store the string DELETE as the value for variable name XYZ-DELETE, store the string RENAME as the value for variable name XYZ-RENAME, and so on.

Program XYZ can now compare the input received with the value contained by the variable XYZ-... known to the program and learn that was received.

Abbreviations can be handled with triplets of or n-tuples of values. As one example, assume abbreviations allow truncation from the right end of the word some minimum number of letters required. Then the values stored could be as follows:

```
XYZ-DELETE DELETE 3
XYZ-REMAME RENAME 2
XYZ-UPDATE UPDATE 3
XYZ-CREATE CREATE 2
```

where the number represents the minimum number of letters that will be accepted as an abbreviation. The utility program would store DELETE as the value of variable XYZ-DELETE, store 3 as the value of XYZ-DELETE-NO, and similarly for the other triples. The program now has enough information to look for partial abbreviations if a match is not found for the complete string DELETE. Other types of abbreviations could use the third value in triple as a pattern to extract the abbreviation letters from the second value in the triple. For example, the preferred abbreviation of SHARED might be SHR, and XX.X.. would be used as the template to extract the abbreviation. The utility programs could contain special provision for non-European languages where truncation may be from the left or where a character requires two bytes of storage.

As a further extension of the invention, a mechanism is provided to facilitate the generation of messages, such as for example error messages, by existing application components such that national language support can be added to these components without making any modifications to the component. This mechanism also allows new languages to be added without modifying the component. Two assumptions are made: first, it is assumed that each message will be preceded by a message identifier which is unique to the message. This is likely to be a valid assumption since standards have been established by companies in the data processing field. In one such standard used by IBM it is stated that each informational or error message should be preceded by a three to six character component identification code followed by a three or four character message number followed by a severity code or action code.

Secondly, it is assumed that each message will be displayed using one of the standard system message services. For instance, in the IBM 370 operating systems these would be: WRITE-To-Operator (WTO), Write-To-operator-with-Reply (WTOR), Terminal PUT (TPUT), WRite TERMinal (WRTERM), or LINE EDIT. This is also likely to be a valid assumption since these are the only services which have been available to perform this function.

The invention modifies the above system services to access a keyed data base using a key consisting of the concatenation of the message identifier and national language code. The data obtained from the data base can then be displayed in place of the original data provided in the error message. If no data is found which matches the derived key, the original message is displayed without modification. By selectively making entries in the data base, specific components can be supported with messages in selected languages. Messages for components and

7

languages not entered into the data base will be unaffected, and the messages will be displayed just as the component originally generated the message. In addition, there are often characters in a message which are not part of the message skeleton itself but are generated by the component. These characters, referred to as variable information, convey additional information about an error or condition. For example, the error message, "EDIMSG5133 INVALID CHARACTER IN FILED ID:..........", indicates the file ID which contains an illegal character. This variable information can be transferred to the translated message by reserving a single character which cannot appear in any translated message, such as for example "%", and then using that character to indicate a substitution from the original message. For instance, the above message could be entered as follows in the message data base: "EDIGMSG513E INVALID CHARACTER IN FIELD ID: %42-8". This would indicate that eight characters, starting with the forty-second character in the original message should be substituted in place of the "%42-8" in the transposed message. The substitution of course, can come from anywhere in the original message and can be placed anywhere in the transposed message.

The invention can, of course, be used to produce messages in languages other than English for many different applications, COBOL being but one example. Thus, using the invention it is possible to provide applications such as language translators, document formatters, high level languages such as FORTRAN and PASCAL, and the like with the ability' to produce messages in any desired language without making any modifications to the application components.

There are many advantages to the concurrent multi-lingual capability provided by the invention. For example, multi-national companies could have one system with user terminals in several countries. A single copy of any function useful to that business could be used in any country without need for every user to know the same language. Additionally, development and maintenance of the business functions would be simplified because only one copy of the program is enough for all users.

A person who needs computer resource could use one located several time zones away. For example, people in California could use a system located in France or Germany. Daytime users in California would benefit from the responsiveness of a lightly loaded system in France where it is night time. This allows better balancing of workload across time zones.

Computer systems in countries that have more than one national language could support usage in any of those languages concurrently. One of the largest countries with more than one national language is Canada; others include Belgium (French and Walloon), and Switzerland (French, German, Italian and Romansh). Brazil trades with neighbouring countries that use Spanish rather than Portuguese and so would probably benefit from multi-lingual computer usage.

The ease with which other languages can be supported also would simplify customizing the same nominal language where differences exist between countries. For examples, French translations used in manuals for Canadian citizens differ from those for citizens of France. Similarly, there are substantial differences between English as used in Australia, England and the United States. Spanish usage that is polite in one Latin America country is considered to be impolite in others.

**Claims**

1. A method of providing a distributed, interactive data processing system with concurrent multi-lingual use by a plurality of users having different national language preferences exchanging messages with said data processing system after establishment of a message model data collection by storing message models via a message identifier primary key that is common for any use, a secondary key that is the national language index, and a user classification tertiary key, by setting said secondary key for a user when that user is enrolled in the data processing system or when that user signs onto the system, and by setting values when said user is enrolled or signs onto the system to identify an order of search among multiple versions of said message model data collections according to the classification of said user, method characterized in that it comprises the steps of:

accepting national language inputs from a plurality of concurrent users having different national language preferences, said concurrent national language inputs being translated and retrieved from the message model data collection;

using a central message service, composing messages from message models retrieved from said message model data collection using said primary and secondary keys in response to a call from an application, application control or supervisor program; and

communicating the composed messages to users in their national language preference.

2. The method according to claim 1 wherein said call is from an application program, said call comprising the step of requesting message composition service using a macro or a subroutine using the macro, said macro causing control to pass to a message request service in a supervisor program.

3. The method according to claim 2 wherein the request by the macro is a direct composition request specifying composition of a message model into a variable, wherein said step of composing comprises the steps of:

using said message request service, calling a message composition service in said supervisor program;

using said message composition service, obtaining the correct message model from said message model data collection based on the message model identification and said secondary key and storing the resulting text as the value of said variable; and

returning control to said application program.

4. The method according to claim 2 wherein the request by the macro requests information from the message model to be given to the user, wherein the step of composing comprises the steps of:

using said message request service in said supervisor program, storing the message model identification in a variable and causing an event to be stacked for a message request service in an application control program;

if said message model identification is one that means an indicator light should be turned on rather than passing textual information to the user, turning on said indicator light and passing control back to said application program following said macro;

if on the other hand text must be passed to the user, then using a control statement in said message request service in said application control program, passing control to a message composition service in said supervisor program;

using said message composition service, obtaining the correct message model from said message model data collection based on the message model identification and said secondary key, storing the resulting text as the value of a variable, and returning control to said message request service in said application control program; and

using said program request service in said application control program, sending the message to the user and, when all application control programs quiesce, returning control to said application program following said macro.

5. The method according to claim 1 wherein said call is from an application control program, said call comprising the step of requesting message composition service using a control statement, said control statement requesting composition of a message model into a variable and passing control to said message composition service in a supervisor program, wherein the step of composing comprises the steps of:

using said message composition service in said supervisor program, obtaining the correct message model from said message model data collection using the message model identification and said secondary key and storing the resulting text as the value of said variable; and

returning control to said application control program following said control statement.

6. The method according to claim 1 wherein said call is from an application control program, said call comprising the steps of storing a message model identification in a variable and calling a message request service in said application control program using control statements, wherein the step of composing further comprises the steps of:

using said message request service in said application control program, deciding how the message is to be passed to the user based on said message model identification;

if said message model identification is one that means an indicator light should be turned on rather than passing textual information to the user, turning on said indicator light and returning control to the next statement below said control statements;

if, on the other hand, text must be passed to the user, then using a control statement in said message request service of said application control program, passing control to a message composition service in a supervisor program;

using said message composition service, obtaining the correct message model from said message model data collection based on the message model identification and said secondary key, storing the resulting text as the value of a variable, and returning control to said message request service in said application control program; and

using said message request service in said application control program, sending the message to the user and returning control to the control statement following said control statements.

7. The method according to claim 1 wherein said call is from a supervisor program, said call comprising the step of requesting message composition service using a macro, said macro causing control to pass to a message request service in said supervisor program.

8. The method according to claim 7 wherein the request by the macro is a direct composition request specifying composition of a message model into a variable, wherein said step of composing comprises the steps of.

using said message composition service, obtaining the correct message model from said message model identification and said secondary key and storing the resulting text as the value of said variable, and

returning control to said supervisor program following said macro.

9. Method according to claim 1 characterized in that it further includes the step of providing in said message model data collection message models of informational and error messages generated by application program components, thereby allowing data obtained from said data collection to be communicated to a user in place of the original data provided in the informational of error message.

10. Method according to claim 9 wherein the step of composing includes the step of generating the original informational or error message for an application program component in the event that no data is found in said data collection corresponding to said primary and secondary keys.

11. Method according to claim 9 wherein the step of providing includes the step of assigning to each informational or error message of an application program component a message identifier comprising a three to six character component identification code preceding said message and following said message, a three or four character message number followed by a severity code or action code.

12. Method according to claim 11 further including the step of retrieving said message models using a key consisting of a concatenation of the message identifier and the national language code.

13. Method according to claim 9 further comprising the step of transferring variable information generated by the application program component to the translated message.

14. Method according to claim 13 wherein the step of transferring includes the step of reserving and using a single character that cannot appear in any translated message in combination with position and character string length in the original message to indicate the variable information in the original message to be transferred to the translated message.

**Patentansprüche**

1. Verfahren zur Bereitstellung eines verteilten, interaktiven Datenverarbeitungssystems mit gleichzeitigem mehrsprachigem Gebrauch durch eine Mehrzahl von Anwendern, welche unterschiedliche nationale Sprachpräferenzen haben und Nachrichten austauschen mit dem genannten Datenverarbeitungssystem nach Einrichtung einer Nachrichtenmodell-Datensammlung durch Speicherung von Nachrichtenmodellen über einen Nachrichtenidentifizierungsprimärschlüssel, welcher für jeden Gebrauch gemeinsam ist, einen Sekundärschlüssel, welcher der nationale Sprachindex ist, und einen Benutzerklassifizierungstertiärschlüssel, durch Setzen des genannten Sekundärschlüssels für einen Benutzer, wenn dieser Benutzer in dem Datenverarbeitungssystem eingetragen ist oder wenn dieser Benutzer sich auf das System verpflichtet, und durch Setzen von Werten, wenn der genannte Benutzer eingetragen ist oder sich auf das System verpflichtet, um einen Suchbefehl zu identifizieren zwischen mehrfachen Versionen der genannten Nachrichtenmodell-Datensammlungen entsprechend der Klassifizierung des genannten Benutzers, wobei das Verfahren dadurch gekennzeichnet ist, dass es ferner die folgenden Schritte enthält:

Annahme nationaler Spracheingaben von einer Vielzahl von gleichzeitigen Benutzern mit unterschiedlichen nationalen Sprachpräferenzen, wobei die genannten gleichzeitigen nationalen Spracheingaben von der Nachrichtenmodell-Datensammlung übersetzt und bereitgestellt werden;

Benutzung eines zentralen Nachrichtendienstes, Zusammenstellung von aus den Nachrichtenmodellen stammenden Nachrichten, die von der genannten Nachrichtenmodell-Datensammlung bereitgestellt werden, welche die genannten Primär- und Sekundärschlüssel als Antwort auf einen Anruf von einem Anwendungs-, Anwendungssteuerungs- oder Überwachungsprogramm benutzt; und

Übermittlung der zusammengestellten Nachrichten an die Anwender in ihrer nationalen Sprachpräferenz.

2. Verfahren nach Anspruch 1, worin der genannte Anruf von einem Anwendungsprogramm stammt, wobei der genannte Anruf den Schritt der Anforderung des einen Makro benutzenden Nachrichtenzusammenstellungsdienstes oder einer den Makro benutzenden Subroutine enthält, wobei der genannte Makro eine Kontrolle veranlasst, um zu einem Nachrichtenanforderungsdienst in einem Überwachungsprogramm zu gelangen.

3. Verfahren nach Anspruch 2, worin die Anforderung durch den Makro eine direkte Zusammenstellungsanforderung ist, welche eine Zusammenstellung von einem Nachrichtenmodell in eine Variable angibt, worin der genannte Schritt der Zusammenstellung die folgenden Schritte enthält:

Benutzung des genannten Nachrichtenanforderungsdienstes, Anrufen eines Nachrichtenzusammenstellungsdienstes in dem genannten Überwachungsprogramm;

Benutzung des genannten Nachrichtenzusammenstellungsdienstes, Erzielen des richtigen Nachrichtenmodells aus der genannten Nachrichtenmodell-Datensammlung, beruhend auf der Nachrichtenmodell-Identifizierung und dem genannten Sekundärschlüssel und Speicherung des sich ergebenden Textes als den Wert der genannten Variablen; und

Rückgabe der Steuerung an das genannte Anwendungsprogramm.

4. Verfahren nach Anspruch 2, worin die Anforderung durch den Makro die Information von dem Nachrichtenmodell anfordert, die an den Benutzer zu geben ist, worin der Schritt der Zusammenstellung folgende Schritte enthält:

Benutzung des genannten Nachrichtenanforderungsdienstes in dem genannten Überwachungsprogramm, Speicherung der Nachrichtenmodell-identifizierung in einer Variablen und Veranlassung eines für einen Nachrichtenanforderungsdienst in einem Anwendungssteuerprogramm zu sammelnden Ereignisses;

wenn die genannte Nachrichtenmodell-Identifizierung eine ist, welche bedeutet, dass eher eine Anzeigelampe eingeschaltet werden sollte, als dass die Textinformation dem Anwender durchgegeben wird, dann die genannte Anzeigelampe einschalten und die Steuerung an das genannte, dem genannten Makro folgenden Anwendungsprogramm zurückgeben;

wenn andererseits der Text dem Anwender durchgegeben werden muss, dann Benutzung einer Steueranweisung in dem genannten Nachrichtenanforderungsdienst in dem genannten Anwendungssteuerprogramm, Übergabe der Steuerung an einen Nachrichtenzusammenstellungsdienst in dem genannten Überwachungsprogramm;

Benutzung des genannten Nachrichtenzusammenstellungsdienstes, Erzielen des richtigen Nachrichtenmodells aus der genannten Nachrichtenmodell-Datensammlung beruhend auf der Nachrichtenmodellidentifizierung und dem genannten Sekundärschlüssel, Speicherung des sich ergebenden Textes als den Wert einer Variablen und Rückgabe der Steuerung an den genannten Nachrichtenanforderungsdienst in dem genannten Anwendungssteuerprogramm; und

Benutzung des genannten Programmanforderungsdienstes in dem genannten Anwendungssteuerprogramm, Senden der Nachricht an den Anwender, wenn alle Anwendungssteuerprogramme ruhen, Rückgabe der Steuerung an das genannte, dem genannten Makro folgenden Anwendungsprogramm.

5. Verfahren nach Anspruch 1, worin der genannte Anruf aus einem Anwendungssteuerprogramm kommt, wobei der genannte Anruf den Schritt der Anforderung an den Nachrichtenzusammenstellungsdienst enthält, welcher eine Steuerungsanweisung benutzt, wobei die genannte Steuerungsanweisung die Zusammenstellung eines Nachrichtenmodells in eine Variable anfordert und Übergabe der Steuerung an den genannten Nachrichtenzusammenstellungsdienst in einem Überwachungsprogramm, worin der Schritt der Zusammenstellung die folgenden Schritte enthält:

Benutzung des genannten Nachrichtenzusammenstellungsdienstes in dem genannten Überwachungsprogramm, Erzielen des richtigen Nachrichtenmodells aus der genannten Nachrichtenmodell-Datensammlung, welche die Nachrichtenmodell-Identifizierung und den genannten Sekundärschlüssel enthält und Speicherung des sich ergebenden Textes als den Wert der genannten Variablen; und

Rückgabe der Steuerung an das genannte Anwendungssteuerprogramm, welches der genannten Steuerungsanweisung folgt.

6. Verfahren nach Anspruch 1, worin der genannte Anruf aus einem Anwendungssteuerprogramm stammt, wobei der genannte Anruf die Schritte der Speicherung einer Nachrichtenmodell-Identifizierung in einer Variablen enthält und den Anruf eines Nachrichtenanforderungsdienstes in dem genannten Anwendungssteuerprogramm, welches Steuerungsanweisungen benutzt, worin der Schritt der Zusammenstellung ferner die folgenden Schritte enthält:

Benutzung des genannten Nachrichtenanforderungsdienstes in dem genannten Anwendungssteuerprogramm, Bestimmung wie die Nachricht dem Benutzer durchzugeben ist, beruhend auf der genannten Nachrichtenmodellidentifizierung;

wenn die genannte Nachrichtenmodellidentifizierung eine ist, welche bedeutet, dass eher eine Anzeigelampe eingeschaltet werden sollte, als dass die Textinformation dem Anwender durchgegeben wird, dann die genannte Anzeigelampe einschalten und die Steuerung an die nächste Anweisung unter den genannten Steuerungsanweisungen zurückgeben;

wenn andererseits der Text dem Anwender durchgegeben werden muss, dann Benutzung einer Steuerungsanweisung in dem genannten Nachrichtenanforderungsdienst des genannten Anwendungssteuerprogramms, Übergabe der Steuerung an einen Nachrichtenzusammenstellungsdienst in einem Überwachungsprogramm;

Benutzung des genannten Nachrichtenzusammenstellungsdienstes, Erzielen des richtigen Nachrichtenmodells aus der genannten Nachrichtenmodell-Datensammlung, beruhend auf der Nachrichtenmodell-Identifizierung und dem genannten Sekundärschlüssel, Speicherung des sich ergebenden Textes als den Wert einer Variablen und Rückgabe der Steuerung an den genannten Nachrichtenanforderungsdienst in dem genannten Anwendungssteuerprogramm; und

Benutzung des genannten Nachrichtenanforderungsdienstes in dem genannten Anwendungssteuerprogramm, Senden der Nachricht an den Benutzer und Rückgabe der Steuerung an die den genannten Steuerungsanweisungen folgende Steuerungsanweisung.

7. Verfahren nach Anspruch 1, worin der genannte Anruf aus einem Überwachungsprogramm stammt, wobei der genannte Anruf den Schritt der Anforderung des einen Makro benutzenden Nachrichtenzusammenstellungsdienstes enthält, wobei der genannte Makro die Steuerung veranlasst, zu einem Nachrichtenanforderungsdienst in dem genannten Überwachungsprogramm überzugehen.

8. Verfahren nach Anspruch 7, worin die Anforderung durch den Makro eine direkte Zusammenstellungsanforderung ist, welche die Zusammenstellung eines Nachrichtenmodells in eine Variable angibt, worin der genannte Schritt der Zusammenstellung die folgenden Schritte enthält:

Benutzung des genannten Nachrichtenzusammenstellungsdienstes, Erzielen des richtigen Nachrichtenmodells aus der genannten Nachrichtenmodell-Identifizierung und dem genannten Sekundärschlüssel und Speicherung des sich ergebenden Textes als den Wert der genannten Variablen, und

Rückgabe der Steuerung an das genannte, dem genannten Makro folgenden Überwachungsprogramms.

9. Verfahren nach Anspruch 1, dadurch gekennzeichnet, dass es ferner enthält den Schritt der Bereitstellung in der genannten Nachrichtenmodell-Datensammlung von Nachrichtenmodellen aus Informations- und Fehlermeldungen, die durch Anwendung von Programmkomponenten erzeugt werden, wobei dadurch ermöglicht wird, dass die aus der genannten Datensammlung erhaltenen Daten an einen Benutzer übermittelt werden anstatt der ursprünglichen, in der Informations- oder Fehlermeldung bereitgestellten Daten.

10. Verfahren nach Anspruch 9, worin der Schritt der Zusammenstellung den Schritt der Erzeugung der ursprünglichen Informations- oder

Fehlermeldung für eine Anwendungsprogrammkomponente beinhaltet, falls keine Daten in der genannten, den genannten Primär- und Sekundärschlüsseln entsprechenden Datensammlung gefunden werden.

11. Verfahren nach Anspruch 9, worin der Schritt der Bereitstellung den Schritt der Zuordnung zu jeder Informations- oder Fehlermeldung einer Anwendungsprogrammkomponente eines Nachrichtenidentifizierers beinhaltet, welcher einen drei bis sechs Zeichenkomponenten enthaltenden Identifizierungskode enthält, welcher der genannten Meldung vorhergeht und der genannten Meldung nachfolgt, eine drei oder vier Zeichen enthaltende Nachrichtenzahl, gefolgt von einer Fehlerwichtung oder einem Aktionskode.

12. Verfahren nach Anspruch 11, enthaltend ferner den Schritt der Bereitstellung der genannten Nachrichtenmodelle, welche einen Schlüssel benutzen, der aus einer Verkettung des Nachrich-tenidentifizierers und des nationalen Sprachen-kodes besteht.

13. Verfahren nach Anspruch 9, enthaltend ferner den Schritt der Übertragung variabler Informationen, die von der Anwendungsprogrammkomponente erzeugt wurden, an die übersetzte Nachricht.

14. Verfahren nach Anspruch 13, worin der Schritt der Übertragung den Schritt der Reservierung und Benutzung eines einzigen Zeichens beinhaltet, das nicht in irgendeiner übersetzten Nachricht in Verbindung mit Position und Länge der Schriftzeichenfolge in der ursprünglichen Nachricht auftreten kann, um die variable Information in der an die übersetzte Nachricht zu übertragenden ursprünglichen Nachricht anzugeben.

**Revendications**

1. Une méthode de réalisation d'un système de traitement de données interactif réparti avec utilisation simultanée en plusieurs langues par une pluralité d'utilisateurs préférant leurs langues nationales différentes et échangeant des messages avec ledit système de traitement de données après établissement d'une collection de données modèles par l'emmagasinage de modèles de messages par l'intermédiaire d'une touche primaire d'identificateur de message qui est commune à toutes les utilisations, d'une touche secondaire qui est l'index de langue nationale et une touche tertiaire de classification d'utilisateur, par le conditionnement de ladite touche secondaire pour un utilisateur lorsque cet utilisateur est engager dans le système de traitement de données ou lorsque lorsque cet utilisateur ouvre une session du système et par le conditionnement de valeurs lorsque ledit utilisateur est engagé ou ouvre une session du système pour identifier un ordre de recherche parmi de multiples versions desdites collections de données modèles de messages selon la classification dudit utilisateur, la méthode étant caractérisée en ce qu'elle comprend en outre les étapes suivantes:

l'acceptation d'entrées en langue nationale à partir d'une pluralité d'utilisateurs simultanés préférant utiliser des langues nationales différentes, lesdites entrées simultanées en langues nationales étant traduites et récupérées à partir de la collection de données modèles de messages,

l'utilisation d'un service de messages central composant des messages à partir de modèles de messages récupérés depuis ladite collection de données de modèles de messages en utilisant lesdites touches primaire et secondaire en réponse à un appel d'un programme d'application, de commande d'application ou de supervision, et

la communication des messages composés aux utilisateurs dans leurs langues nationales.

2. La méthode selon la revendication 1 dans laquelle ledit appel est issu d'un programme d'application, ledit appel comprenant l'étape de requête du service de composition de messages en utilisant une macro-routine ou une sous-routine utilisant la macro-routine, ladite macro-routine provoquant le passage de la commande à un service de requête de message dans un programme de supervision.

3. La méthode selon la revendication 2 dans laquelle la requête par la macro-routine est une requête de composition directe spécifiant la composition d'un modèle de message dans une variable, dans laquelle ladite étape de composition comprend les étapes suivantes:

l'utilisation dudit service de requête de messages, l'appel d'un service de composition de messages dans ledit programme de supervision,

l'utilisation dudit service de composition de messages, l'obtention du modèle de message correct à partir de ladite collection de données de modèles de messages en se basant sur l'identification du modèle de message et ladite touche secondaire et l'emmagasinage du texte obtenu comme valeur de ladite variable, et le retour de la commande audit programme d'application.

4. La méthode selon la revendication 2 dans laquelle la requête par la macro-routine requiert des informations du modèle de message à donner à l'utilisateur, dans laquelle l'étape de composition comprend les étapes suivantes:

l'utilisation dudit service de requête de messages dans ledit programme de supervision, l'emmagasinage de l'identification de modèle de message dans une variable et la commande de l'empilage d'un évènement pour un service de requête de messages dans un programme de commande d'application,

si ladite identification de modèle de message est une identification qui signifie qu'un indicateur lumineux devrait être allumé plutôt que de passer des informations textuelles à l'utilisateur, l'allumage dudit indicateur lumineux et le renvoi de la commande audit programme d'application suivant ladite macro-routine,

si, d'autre part, du texte doit être passé à l'utilisateur, l'utilisation d'une assertion de commande dans ledit service de requête de messages dans ledit programme de commande d'application, le passage de la commande à un service de composition de messages dans ledit programme de supervision,

l'utilisation dudit service de composition de messages, l'obtention du modèle de message correct de ladite collection de données de modèles de messages en se basant sur l'identification du modèle de message et ladite touche secondaire, l'emmagasinage du texte obtenu comme valeur d'une variable et le renvoi de la commande audit service de requête de messages dans ledit programme de commande d'application, et

l'utilisation dudit service de requête de programme dans ledit programme de commande d'application, l'envoi du message à l'utilisateur et lorsque tous les programmes de commande d'application sont au repos, le renvoi de la commande audit programme d'application suivant ladite macro-routine.

5. La méthode selon la revendication 1 dans laquelle ledit appel est issu d'un programme de commande d'application, ledit appel comprenant l'étape de requête du service de composition de messages en utilisant une assertion de commande, ladite assertion de commande requérant la composition d'un modèle de message dans une variable et le passage de la commande audit service de composition de messages dans un programme de supervision, dans laquelle l'étape de composition comprend les étapes suivantes:

l'utilisation dudit service de composition de messages dans ledit programme de supervision, l'obtention du modèle de message correct à partir de ladite collection de données de modèles de messages en utilisant l'identification de modèle de message et ladite touche secondaire l'emmagasinage du texte obtenu comme valeur de ladite variable, et

le renvoi de la commande audit programme de commande d'application suivant ladite assertion de commande.

6. La méthode selon la revendication 1 dans laquelle ledit appel est issu d'un programme de commande d'application, ledit appel comprenant les étapes d'emmagasinage d'une identification de modèle de message dans une variable et d'appel d'un service de requête de messages dans ledit programme de commande d'application en utilisant des assertions de commande, dans laquelle l'étape de composition comprend en outre les étapes suivantes:

l'utilisation dudit service de requête de messages dans ledit programme de commande d'application, la décision de la méthode de passage du message à l'utilisateur en se basant sur ladite identification de modèle de message,

si ladite identification de modèle de message signifie qu'un indicateur lumineux devrait être allumé plutôt que de passer des informations textuelles à l'utilisateur, le conditionnement dudit indicateur lumineux et le renvoi de la commande à l'assertion suivante sous lesdites assertions de commande,

si, d'autre part, du texte doit être passé à l'utilisateur, l'utilisation d'une assertion de commande dans ledit service de requête de messages dudit programme de commande d'application, le passage de la commande à un service de composition de messages dans un programme de supervision,

l'utilisation dudit service de composition de messages, l'obtention du modèle de message correct à partir de ladite collection de données de modèles de messages en se basant sur l'identification du modèle de message et ladite touche secondaire, l'emmagasinage du texte obtenu comme valeur d'une variable et le renvoi de la commande audit service de requête de messages dans ledit programme de commande d'application, et

l'utilisation dudit service de requête de messages dans ledit programme de commande d'application, l'envoi du message à l'utilisateur et le retour de la commande à l'assertion de commande suivant lesdites assertions de commande.

7. La méthode selon la revendication 1 dans laquelle ledit appel est issu d'un programme de supervision, ledit appel comprenant l'étape de requête du service de composition de messages utilisant une macro-routine, ladite macro-routine provoquant le passage de la commande à un service de requête de messages dans ledit programme de supervision.

8. La méthode selon la revendication 7 dans laquelle la requête par la macro-routine est une requête de composition directe spécifiant la composition d'un modèle de message dans une variable, dans laquelle ladite étape de composition comprend les étapes suivantes:

l'utilisation dudit service de composition de messages, l'obtention du modèle de message correct à partir de l'identification dudit modèle de message et de ladite touche secondaire et l'emmagasinage du texte obtenu comme valeur de ladite variable, et

le renvoi de la commande audit programme de supervision suivant ladite macro-routine.

9. La méthode selon la revendication 1 caractérisée en ce qu'elle comprend en outre l'étape de provision dans ladite collection de données de modèles de messages, de modèles de messages d'information et de messages d'erreur générés par l'application de composants de programmes, ce qui permet ainsi aux données obtenues à partir de ladite collection de données, d'être communiquées à un utilisateur à la place des données originales fournies dans l'information du message d'erreur.

10. La méthode selon la revendication 9 dans laquelle l'étape de composition comprend l'étape de génération de l'information originale ou message d'erreur pour un composant de programme d'application dans le cas où aucune donnée n'est trouvée dans ladite collection de données correspondant auxdites touches primaire et secondaire.

11. La méthode selon la revendication 9 dans laquelle l'étape de provision comprend l'étape d'attribution à chaque information ou message d'erreur d'un composant de programme d'application, d'une identification de message comprenant un code d'identification de composant de trois à six caractères précédant ledit message et suivant ledit message, un numéro de message de trois à quatre caractères suivi par un code de gravité ou code d'action.

12. La méthode selon la revendication 11 comprenant en outre l'étape de récupération desdits modèles de messages en utilisant une touche, consistant en un enchaînement de l'identificateur de message et du code de langue nationale.

13. La méthode selon la revendication 9 comprenant en outre l'étape de transfert d'informations variables générées par le composant de programme d'application appliqué au message traduit.

14. La méthode selon la revendication 13 dans laquelle l'étape de transfert comprend l'étape de réservation et d'utilisation d'un caractère unique qui ne peut pas apparaitre dans un message traduit quelconque en combinaison avec la position et la longueur de la suite de caractères dans le message original pour indiquer l'information variable dans le message original à transférer au message traduit.

MACRO OR SUBROUTINE

MSG MSGNO = ABC_1, COMP = MSGI — 14

APPLICATION

a

APPLICATION
CONTROL

e

13

b

d

17

MESSAGE REQUEST — 15

MESSAGE COMPOSITION

SUPERVISOR

c

18

MESSAGE MODEL DATA COLLECTION

FIG.I    APPLICATION USE, DIRECT COMPOSITION

1

CONTROL STATEMENT

COMPOSE. JKL.I INTO $MSGI

12

11

APPLICATION
CONTROL

o

c

13

17

SUPERVISOR

MESSAGE REQUEST

15

MESSAGE COMPOSITION

b

18

MESSAGE MODEL DATA COLLECTION

FIG.2  APPLICATION CONTROL USE, DIRECT COMPOSITION

**FIG.3** SUPERVISOR USE, DIRECT COMPOSITION

# FIG.4    APPLICATION USE, CENTRAL COMPOSITION

APPLICATION

MACRO OR SUBROUTINE

10

9

14

a

APPLICATION
CONTROL

EVENT  HANDLER

19

12
TO USER

MESSAGE    REQUEST

b

c

e

SUPERVISOR

13

MESSAGE REQUEST

15

MESSAGE COMPOSITION

17

d

18

MESSAGE MODEL DATA COLLECTION

4

FIG.5    APPLICATION CONTROL USE, CENTRAL COMPOSITION

APPLICATION
CONTROL

12

EVENT HANDLER

MESSAGE REQUEST

19

f

TO USER

b

g

c

e

SUPERVISOR

13

MACRO

$MSG MSGNO = XYZ_1

16

a

15

MESSAGE REQUEST

17

MESSAGE COMPOSITION

d

18

MESSAGE MODE DATA COLLECTION

FIG.6    SUPERVISOR USE, CENTRAL COMPOSITION